Europäisches Patentamt

**European Patent Office**

**Office européen des brevets**

(11) Veröffentlichungsnummer: **0 212 292**
**A1**

(12) **EUROPÄISCHE PATENTANMELDUNG**

(21) Anmeldenummer: **86110025.3**

(22) Anmeldetag: **22.07.86**

(51) Int. Cl.⁴: **A 23 J 3/00**

(30) Priorität: **31.07.85 DE 3527337**

(43) Veröffentlichungstag der Anmeldung: **04.03.87**
**Patentblatt 87/10**

(84) Benannte Vertragsstaaten: **AT BE CH DE FR GB IT LI NL SE**

(71) Anmelder: **HOECHST AKTIENGESELLSCHAFT,**
**Postfach 80 03 20, D-6230 Frankfurt am Main 80 (DE)**

(72) Erfinder: **Wirner, Helmut, Prof. Dr., Ahornweg 42, D-5758 Fröndenberg (DE)**
Erfinder: **Rapp, Rudolf, Dr., Säntisstrasse 17, D-7770 Überlingen (DE)**
Erfinder: **Deger, Hans-Matthias, Dr., Am Rheingauer Weg 8, D-6238 Hofheim am Taunus (DE)**

(54) **Extrudiertes Nahrungsmittelprodukt aus mikrobiellem Proteinisolat und Verfahren zu seiner Herstellung.**

(57) Ein mikrobielles Proteinisolat wird als neuer Rohstoff für extrudierte Nahrungsmittel verwendet. Es können bis zu 95% Protein eingesetzt werden, das bei niedrigen Drehzahlen, niedrigem Druck und niedrigen Temperaturen extrudiert wird. Dabei erhält man ein knuspriges Produkt mit angenehmer Textur und guten technologischen Eigenschaften, z.B. Kochfestigkeit.

EP 0 212 292 A1

HOECHST AKTIENGESELLSCHAFT    HOE 85/F 135      Dr.KH/St

## Extrudiertes Nahrungsmittelprodukt aus mikrobiellem Proteinisolat und Verfahren zu seiner Herstellung

Extrudierte Produkte sind als Snacks auf dem Lebensmittelmarkt sehr beliebt. So können Maisgrieß oder andere stärkehaltige Produkte in der Weise behandelt werden, daß das Gut zunächst auf einen Wassergehalt von ungefähr 15 % gebracht wird und im Extruder unter Druck und Wärme plastifiziert, gelatiniert und durch eine kleine Düse gegen den atmosphärischen Druck expandiert, d.h. aufgeschäumt wird.

Es können auch proteinhaltige Produkte extrudiert werden. Bislang setzte man dazu sowohl tierische Proteine ein, beispielsweise Eiweißpulver oder Milcheiweiß (Caseinate), als auch pflanzliches Protein, insbesondere Gelbmaisprotein und Sojaprotein. Die Rezepturen für solche Produkte enthalten jedoch nur bis zu 30 % Protein. Die restlichen Bestandteile sind im wesentlichen Polysaccharide, Mineralstoffe, Wasser und eventuell Ballaststoffe. Ein diätetisches Nahrungsmittel dieser Art wird in der deutschen Offenlegungsschrift 2 847 503 beschrieben.

Rezepturen mit steigenden Gehalten der bisher eingesetzten Proteine sind jedoch technologisch immer schwieriger zu handhaben. In einem Doppelwellen-Kochextruder sind dabei sehr hohe Drehzahlen von 300 - 400 U/min bei einem hohen Druck bis zu 100 bar und hohen Temperaturen von 200 - 250°C notwendig. Diese Arbeitsweise liefert, bei Proteingehalten von 70 - 80 %, Produkte, die sehr hart sind und erst durch Wässern oder Kochen verzehrbar werden. Durch Beimengungen anderer nicht bzw. nur geringfügig eiweißhaltiger Lebensmittel in geringem Umfang von 2 - 3 % verlieren solche Produkte ihre Texturierbarkeit bzw. ihre Kochfestigkeit.

Vor allem im diätetisch-medizinischen Nahrungsmittelbereich möchte man auf extrudierte proteinhaltige Produkte jedoch nicht verzichten. Sie werden, um nur ein Beispiel zu nennen, zur Aufhebung von Proteinmangel eingesetzt, der vielfach durch therapeutische Behandlung von Fettleibigkeit, Atherosklerose, sowie bei der Behandlung bestimmer infektiöser oder traumatischer Zustände oder bei der Genesung von schweren chirurgischen Eingriffen auftritt. Insofern besteht ein großer Bedarf für ein Nahrungsmittel, das auf der einen Seite einen sehr hohen Proteingehalt hat, auf der anderen Seite aber technologisch leicht zu verarbeiten, insbesondere zu extrudieren ist, dabei Eigenschaften wie Textur und Kochfestigkeit nicht verliert und als appetitlich-knuspriges, aber nicht hartes Lebensmittel verzehrt werden kann.

Der Einsatz von mikrobiellen Proteinisolaten als neuer Rohstoff für extrudierte Nahrungsmittel mit einem Proteingehalt bis zu 95 % lieferte überraschenderweise ein Produkt, das die oben genannten Anforderungen erfüllt.

Die Erfindung betrifft somit:

1. Ein extrudiertes Nahrungsmittel auf Proteinbasis, das dadurch gekennzeichnet ist, daß es hauptsächlich aus einem mikrobiellen Proteinisolat mit weiteren Zusatzstoffen als Beimengung besteht.

2. Ein Verfahren zur Herstellung eines extrudierten Nahrungsmittels auf Proteinbasis, das dadurch gekennzeichnet ist, daß man ein mikrobielles Proteinisolat als Hauptbestandteil und weitere Zusatzstoffe miteinander mischt und durch Extrusion verzehrbare Produkte herstellt.

In der folgenden Beschreibung und in den Patentansprüchen sind bevorzugte Ausgestaltungen der Erfindung aufgeführt.

Als Ausgangsmaterial kommen grundsätzlich alle mikrobiellen Zellmassen in Betracht. Bevorzugt sind Zellmassen methylotropher, vor allem obligat methylotropher Organismen, insbesondere Methanol verwertender Mikroorganismen, da Methanol eine billige, Erdöl-unabhängige Kohlenstoffquelle darstellt. Methanol verwertende Mikroorganismen sind in großer Zahl bekannt und beispielsweise in den europäischen Patentanmeldungen 35 831 und 37 273, in der deutschen Auslegeschrift 21 61 164 und insbesondere in der deutschen Patentschrift 26 33 451 beschrieben.

Mikroorganismen enthalten wie alle Zellen neben Proteinen und Kohlenhydraten auch Nukleinsäuren und Lipide. Bei der Aufarbeitung mikrobieller Zellmassen zur Gewinnung von Proteinen für die menschliche Ernährung werden außer den Nukleinsäuren auch die Lipide abgetrennt, da diese den Geruch, Geschmack und die Haltbarkeit der Proteine beeinträchtigen. Die Entfernung der Lipide erfolgt durch Extraktionen mit Lipidlösemitteln. Entsprechende Verfahren sind beispielsweise in der deutschen Patentschrift 26 33 666 genannt. Besonders bevorzugt ist das in dieser deutschen Patentschrift beanspruchte Verfahren, bei dem die Lipide mit einer Extraktionsmischung aus Ammoniak und einem polaren Lösemittel aus der Reihe der niederen Alkanole, niederen Glykole oder der Methyl- oder Ethylether eines niederen Glykols extrahiert werden, wobei diese Extraktionsmischung höchstens 30 Gew.-% Wasser, bezogen auf die eingesetzte Lösemittelmenge, enthält. Das bevorzugte Lösemittel ist Methanol. Der Ammoniakgehalt liegt vorzugsweise bei 1 bis 10 Gew.-%, bezogen auf die eingesetzte Lösemittelmenge. Hierauf erfolgt eine ein- oder mehrstufige Extraktion der Nukleinsäuren mit Wasser.

Es ist vorteilhaft, wenn die mikrobiellen Zellmassen vor der Extraktion der Lipide durch eine Hitzebehandlung bei Temperaturen von 105 bis 160°C konditioniert werden. Diese Hitzebehandlung dauert vorteilhaft 3 bis 40, insbesondere 5 bis 20 Minuten bei einer Produkt-Temperatur von 105 bis 140°C. Dieses Verfahren führt nicht nur zu einer Verbesserung der mechanischen Eigenschaften der mikrobiellen Rohbiomasse, die einen geringeren Proteinverlust in der folgenden Extraktion ergibt, sondern hat auch einen vorteilhaften Einfluß auf die physiologischen Eigenschaften der Proteine.

Das nach dieser Behandlung anfallende mikrobielle Proteinisolat kann als Rohstoff für die erfindungsgemäßen extrudierten Nahrungsmittel eingesetzt werden.
Es ist jedoch vorteilhaft, das Protein gemäß der deutschen Offenlegungsschrift 31 43 947 enzymatisch mit Hilfe von Proteasen abzubauen und das Eiweißhydrolysat von besonders hochmolekularen, nicht suspendierbaren Partikeln mittels eines Separators zu befreien. Hierbei ist darauf zu achten, daß bei dem enzymatischen Abbau keine Nebenprodukte wie Bitterstoffe entstehen, die eine Verwendung für die menschliche Ernährung ungeeignet machen.

Den Proteinisolaten können Stoffe zur Geschmacksverbesserung und Nährwertabrundung zugesetzt werden, beispielsweise Polysaccharide, Ballaststoffe, Pflanzenöle mit einem hohen Anteil an ungesättigten Fettsäuren, Vitamine und Mineralstoffe sowie Gewürze und Aromen. Die Zugabemenge in einem sinnvollen Rahmen ist von dem jeweiligen Verwendungszweck abhängig. Zur Extrusion wird dem Produkt gegebenenfalls eine Flüssigkeit, beispielsweise Wasser, Milch oder Alkohol, in Konzentrationen von 10 - 20 %, vorzugsweise 15 %, hier und im folgenden bezogen auf das Feststoffgewicht, zugemischt. Das mikrobielle Protein kann auch zusammen mit pflanzlichen und tierischen Proteinen, vorzugsweise Sojaprotein, in einer Menge von 5 - 10 % eingesetzt werden. Mischungen mit 70 - 95 % mikrobiellem Proteinisolat, vorzugsweise 80 - 90 %, werden in einem Ein- oder Doppelwellen-Kochextruder maschinenabhängig bei Drehzahlen von 10 - 400 U/min, vorzugsweise 120 - 200 U/min, insbesondere 160 - 180 U/min, niedrigen Temperaturen von 80 - 150°C, insbesondere 100 - 130°C und niedrigem Druck von 10 - 500 bar, vorzugsweise 15 - 50 bar, insbesondere 20 - 30 bar, extrudiert. Die Extrusion unter den genannten besonders bevorzugten Bedingungen bedeutet einen geringeren Energieaufwand und eine produktschonendere Behandlung, verglichen mit der herkömmlichen Verfahrensweise zur Herstellung extrudierter Nahrungsmittel.

Man erhält ein Produkt von überdurchschnittlicher Texturstabilität, das im Vergleich zum Ausgangsprodukt eine verringerte Dichte und eine verbesserte Haltbarkeit aufgrund des geringeren Wassergehaltes aufweist. Das Produkt ist angenehm trocken mit einer leichten, bisquitartigen bis knusprigen Konsistenz, und kann ohne weitere Behandlung zum Beispiel als Snack, verzehrt werden. Weiterhin ist hervorzuheben, daß das Produkt in Wasser quellbar und kochfest ist und dann eine fleischähnliche, faserige Struktur besitzt. Somit kann ein Produkt mit diesen Eigenschaften auch in Fertiggerichten, wie beispielsweise Fertigsuppen, die oft als Zwischenmahlzeiten verzehrt werden, Anwendung finden.

Für die folgenden Beispiele wird eine Bakterienmasse aus Methylomonas clara ATCC 31 226 gemäß Deutscher Patentschrift 26 33 451 (U.S. Patentschrift 4 166 004), Beispiel 2, mit einem Nukleinsäuregehalt von 8 - 10 %, einem Rohfettgehalt von 5 bis 10 % und einer Restfeuchte von 2 bis 4 % eingesetzt. Dieses Material wird 30 Minuten in einem Wirbelbett bei 160°C Lufttemperatur behandelt, wobei 10 Minuten eine Produkttemperatur von 120°C eingehalten wird. Diese thermisch nachbehandelte Zellmasse wird dann gemäß Beispiel 1 der deutschen Patentschrift 26 33 666 (U.S. Patentschrift 4 206 243) mit methanolischem Ammoniak und anschließend mit Wasser extrahiert und gemäß der deutschen Offenlegungsschrift 3 143 947, Beispiel 1 enzymatisch abgebaut und nach Trocknung zur erfindungsgemäßen Extrusion eingesetzt.

**Beispiel 1**
Eine homogene Mischung der folgenden Rezeptur

89 % mikrobielles Proteinisolat
6 % Weizengrieß
5 % Sojamehl

wird in dem Kochextruder Continua 58 (Werner & Pfleiderer) unter Zugabe von 12 % Wasser bei einer Drehzahl von 170 U/min, einem Druck von 30 bar und einer Temperatur von 100°C extrudiert.

Die Extrusionsstränge können beliebig verformt werden. Zugeschnitten in Stücke erhält man knusprige, aufgepuffte, in der Textur an Erdnußflips erinnernde Extrudate, die sich vorzüglich als proteinreicher Snackartikel zum direkten Verzehr oder z.B. als Backerbsen-ähnliche Produkte für Suppeneinlagen eignen.

**Beispiel 2**
Man verfährt gemäß Beispiel 1, setzt jedoch folgende Rezeptur ein:

83 % mikrobielles Proteinisolat
4 % Weizengrieß
6 % Sojakonzentrat
7 % Ballaststoff, z.B. Sojakleie

Den Produkten können in an sich bekannter Weise und Menge Gewürze und Aromen zugesetzt werden.

PATENTANSPRÜCHE:

1. Extrudiertes Nahrungsmittel auf Proteinbasis, dadurch gekennzeichnet, daß es aus einem mikrobiellen Proteinisolat als Hauptbestandteil und weiteren Lebensmittelstoffen als Beimengung besteht.

2. Extrudiertes Nahrungsmittel nach Anspruch 1, dadurch gekennzeichnet, daß es aus 70 - 95 %, bezogen auf das Gewicht aus mikrobiellem Proteinisolat besteht.

3. Extrudiertes Nahrungsmittel nach Anspruch 2, dadurch gekennzeichnet, daß es aus 80 - 90 %, bezogen auf das Gewicht, aus mikrobiellem Proteinisolat besteht.

4. Extrudiertes Nahrungsmittel nach einem oder mehreren der Ansprüche 1 - 3, dadurch gekennzeichnet, daß die Beimengungen geschmacksverbessernde und/oder nährwertabrundende Lebensmittelstoffe und/oder Wasser sind.

5. Extrudiertes Nahrungsmittel nach einem oder mehreren der Ansprüche 1 - 4, dadurch gekennzeichnet, daß es sich durch überdurchschnittliche Texturstabilität, verbesserte Haltbarkeit und verringerte Dichte auszeichnet.

6. Verfahren zur Herstellung eines extrudierten Nahrungsmittels dadurch gekennzeichnet, daß man ein mikrobielles Proteinisolat als Hauptbestandteil und weitere Lebensmittelstoffe als Beimengungen miteinander mischt und durch Extrusion ein verzehrbares Produkt herstellt.

7. Verfahren nach Anspruch 6, dadurch gekennzeichnet, daß die Extrusion bei einer Drehzahl von 10 - 400 U/min, einem Druck von 10 - 500 bar und einer Temperatur von 80 - 150°C durchgeführt wird.

8. Verfahren nach Anspruch 7, dadurch gekennzeichnet, daß die Extrusion bei einer Drehzahl von 160 - 180 U/min, einem Druck von 20 - 30 bar und einer Temperatur von 100 - 130°C durchgeführt wird.

**Europäisches Patentamt**

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 090 820  (STANDARD OIL) <br> * Ansprüche 1,3,6,8; Seite 3, Zeilen 10-21; Seite 7, Zeilen 1-5; Seite 9, Zeilen 4-9; Seite 10, Zeilen 1,2; Seite 11, Zeilen 24-31 * | 1-8 | A 23 J   3/00 |
| X | US-A-3 925 562  (S.R. TANNENBAUM) <br> * Ansprüche 1-3; Spalte 4, Zeilen 31-35 * | 1-8 | |
| X | BE-A- 820 074  (BRITISH PETROLEUM) <br> * Ansprüche 1,2,5,9,10,11,13,14,16-18; Seite 5, Absätze 7,8; Beispiel 1 * | 1-8 | |
| X | US-A-3 939 284  (C. AKIN et al.) <br> * Ansprüche 1,17,19,24; Spalte 5, Zeilen 1-6 * | 1-8 | RECHERCHIERTE SACHGEBIETE (Int. Cl.4) <br><br> A 23 J |

Der vorliegende Recherchenbericht wurde für alle Patentansprüche erstellt.

| Recherchenort <br> DEN HAAG | Abschlußdatum der Recherche <br> 13-11-1986 | Prüfer <br> PEETERS J.C. |
|---|---|---|